# EUROPEAN PATENT SPECIFICATION

(11) **EP 0 602 801 B1**
(45) Date of publication and mention of the grant of the patent: **29.01.1997**
(21) Application number: 93309175.3
(22) Date of filing: 17.11.1993
(51) Int. Cl.: F24C 15/20, F24C 15/30

(54) **Coupling apparatus**
Kupplungsvorrichtung
Dispositif de connexion

(30) Priority: 19.11.1992 GB 9224222
(43) Date of publication of application: 22.06.1994
(73) Proprietor: SAGE-PASSANT, Peter, Houghton Regis, Beds LU5 5BG (GB)
(72) Inventor: SAGE-PASSANT, Peter, Houghton Regis, Beds LU5 5BG (GB)
(74) Representative: Gregory, Timothy Mark

(56) References cited:
- WO-A-93/07415
- DE-A- 4 020 762
- GB-A- 2 243 422
- US-A- 3 537 442
- US-A- 5 133 786

## Description

This invention relates to apparatus for coupling fluid flow lines and a unit of catering equipment, such as a convection steaming oven, which requires coupling together a fluid flow line, a waste line and optionally a gas line.

Commercial catering establishments are subject to stringent health and hygiene requirements. Ease of access for cleaning purposes is a major consideration in the design of kitchens and catering equipment. It is increasingly common for units to be mobile, thereby allowing staff full access to clean both the equipment itself and the underlying floor area. However, not all catering equipment is readily made mobile. Sink units and ovens or hobs, for example, necessarily require connection to feed services, and it is these connections which have hitherto limited such units to static fixtures. Unfortunately, it is around these very fixtures that a large proportion of food handling is done, and thus it is essential that they, and the area around them, can be adequately cleaned. Flexible links between the service supply ports and the unit have been suggested, but these are cumbersome to accommodate when the unit is in place, prone to leakage and themselves pose not inconsiderable cleaning difficulties. It is a combination of these problems that makes the use of flexible links at least unattractive, and often unacceptable.

It is known from our GB Application No. 2 243 422A to provide a connection for water and waste inlets and outlets for a movable sink unit.

It is also known from our PCT Application No.WO 93/07415, published 15.04.93, state of the art according to Article 54(3), to provide a gas tight connection for a gas inlet to a movable oven unit.

It is an object of the present invention to overcome, or at least reduce, the problems of cleaning catering equipment requiring service connections.

In particular, one item of catering equipment is a convection steaming oven. This requires an electrical input, which may be conventional, a water inlet line, a waste outlet line and optionally a gas inlet line. One special requirement of such ovens is that that waste pipe incorporates an air break to prevent back pressure and waste contamination.

It is therefore a further object of the present invention to provide a connector system which allows demountable connection of a convection steaming oven including these parameters.

According to the present invention there is provided an apparatus for coupling fluid flow lines and a convection steaming oven, the apparatus comprising: a wall-mountable connection unit supporting a plurality of base connector elements extending away from the wall and each for connection to a respective fluid flow service line in the wall; a plurality of satellite connector elements, each engageable in fluid-tight manner to a respective one of the base connector elements, and each connected, in use, to the convection steaming oven whereby said oven may be freely moved between an operational disposition adjacent the wall with the respective base and satellite connectors mutually engaged, and a de-coupled disposition away from the wall, with all the respective base and satellite connectors disengaged; and latching means for maintaining said oven in the operational disposition until release of the latching means allows transition to the de-coupled disposition, wherein a waste line connection comprises an exhaust means (2) to release any excessive steam, a waste chamber (5) within the base element (26), a waste outlet (6) connected to said waste chamber (5), and means (4) to connect the waste line connection to the waste chamber when the unit is engaged.

The exhaust means may be a chimney means connected to the pathway between the waste outlet of the convection steaming oven and the connection to the waste chamber.

Preferably the connection unit takes the form of a connection box.

Preferably, all the supply lines (such as gas and water) have double shut-off base and satellite connector assemblies.

Preferably said oven and a carrying means therefor has a single operating lever to operate the latching means. For example, the single lever may be connected to sleeves on the satellite connectors of the supply lines. The single lever may be actuated by a manual mechanism mounted on carrying means for said oven.

Preferably, a connection between the lever and the manual mechanism passes through an expansion box, whereby the release handle is allowed to return fully into its recessed housing when the unit is engaged.

Preferably the connection between said oven and the connection unit includes an electrical earth connection, and preferably the carrying means for said oven is mounted on wheels, rollers or castors.

An embodiment of the present invention will now be more particuarly described by way of example and with reference to the accompanying drawings, in which:

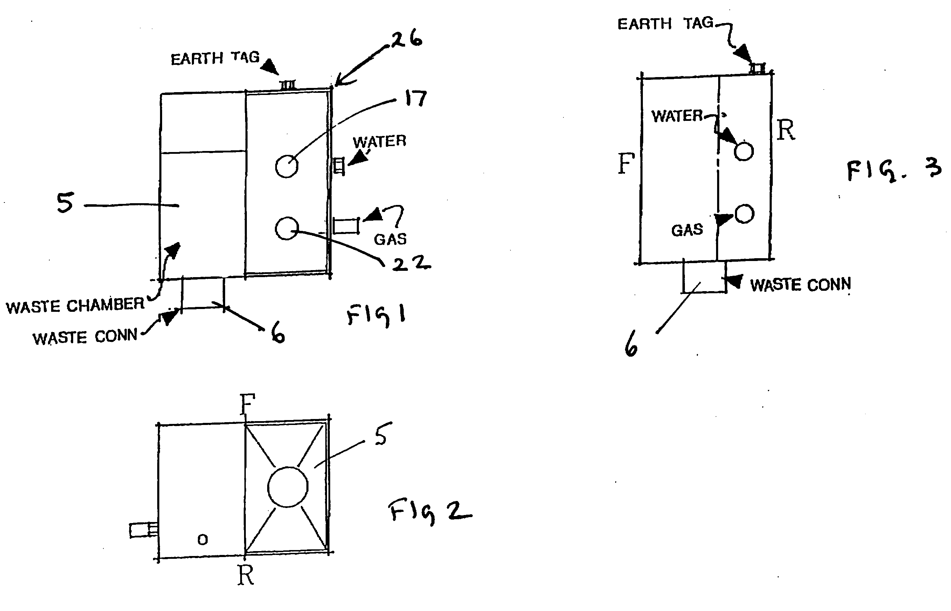

FIGURE 1 is a front view of a connection unit mountable to a wall;
FIGURE 2 is a plan view of the unit as shown in Figure 1;
FIGURE 3 is a side view of the unit of Figures 1 and 2;
FIGURE 4 is a front view of a carrying unit for said oven when connected to the wall mounted unit of the previous Figures;
FIGURE 5 is a side view of the unit of Figure 4;

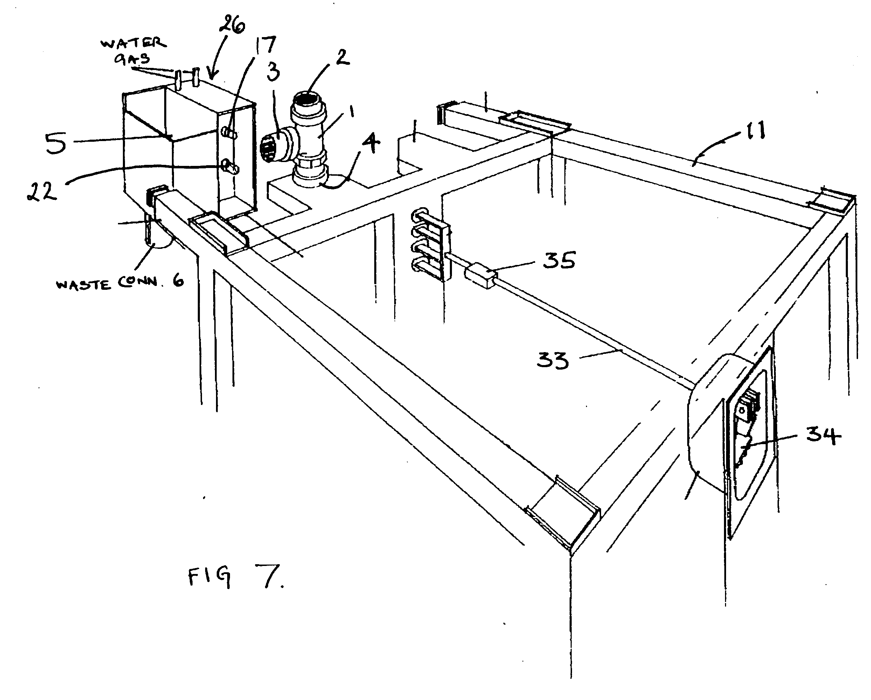

FIGURE 6 is a plan view of the carrying unit shown in Figures 4 and 5; and
FIGURE 7 is a perspective schematic view of the carrying unit and the connection unit mounted to a wall, the convection steaming oven being mounted above this unit and being connected thereto as described below.

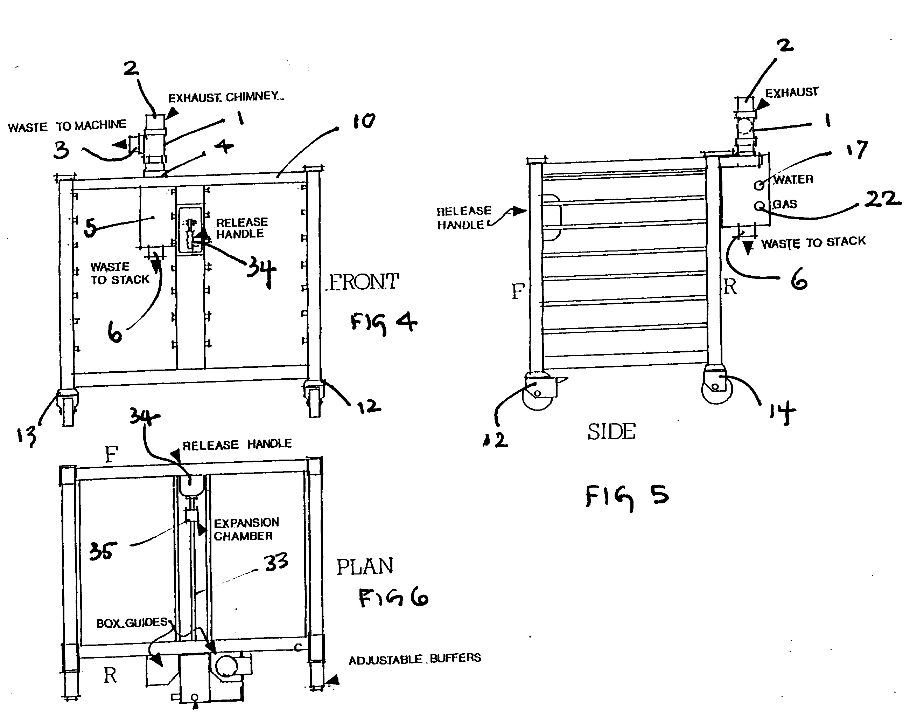

Referring to Figure 4, a unit top 10 has an underframe 11 adapted to receive castors 12, 13, 14 and 15. Carried on the underframe 11 are satellite connector elements. A first satellite connector 17 communicates with a water feed inlet through a water flow line, and a satellite waste connector communicates with an exit from the convection steaming oven (not shown). A gas line connection 22 is provided in the embodiment shown. However, this may be omitted or not used when the oven is electrically powered.

When the oven unit is brought into abutment with the wall unit, the satellite connectors make press fit sealing engagement with respectively co-operating base connections, although this is not important in the case of the waste connection.

Each of the satellite connectors has a sleeve which engages over the spigot end of the corresponding base connectors for latching engagement of these connectors. The double shut-off connectors are well known in themselves, and the base and satellite connector portions are self sealing until such time as they are in latched engagement.

When bringing the oven unit into abutment with the wall, the unit is guided into its appointed position by co-operation between bevelled edges on the back of the underframe 11 and the sides of a wall connection unit 26.

In the case of a convection steaming oven, there is a water waste outlet which enters a tee junction 1 at connection 3. Above said tee junction 1 is an exhaust chimney 2, which allows any build up of steam from the oven to exhaust to atmosphere and the other connection 4 is adapted to pass liquid waste into the wall connector, when the apparatus is functional.

Within the wall mounted connector is a waste chamber 5 adapted to receive liquid waste from the oven via connector 4. The space within the waste chamber 5 allows any liquid to expand and exhaust steam via the chimney 2 and residual liquid is removed via connector 6 to the normal drain system.

A link rod 33 actuated by a manually operable release handle 34 mounted on the underframe 11 connects to sleeves of the satellite connector elements.

Manipulation of the release handle 34 allows the unit to be disconnected from the wall mounted unit. An expansion chamber 35 is connected along the link rod 33 to enable the release handle to be inserted within the confines of the mobile unit underframe 11 after it has been pulled out.

In use full operational coupling of the oven and underframe unit to the services at the connection box 26 is achieved simply by pressing the unit into its appointed place against the wall, whereupon the satellite connections mounted to the unit 10 make engagement with the corresponding base connectors in the connection unit 26.

For cleaning around the unit, operation of the handle 34 causes the link rod 33 to displace longitudinally thereby pulling the sleeves axially away from the base connection spigots, to release the line connectors. Thus pulling the unit from the coupled disposition to its de-coupled disposition will not result in release of water or gas to the floor.

To re-engage the unit with the connection unit 26 no manipulation of the handle 34 is necessary. Instead simply moving the unit into the wall will achieve fresh latching engagement of the line connectors.

As may be seen, the waste chamber 5 is open at its upper surface and the connection 4 delivers fluid down into it. As may be seen from Figure 7, the carrying unit includes a portion to which the connection 4 is attached and which is adapted to mate with the waste chamber 5. It is not important that this connection is made sealingly since part of the function of the waste chamber 5 is to allow escape of excess gas or steam. However, the connection should be liquid-tight.

## Claims

1. An apparatus for coupling fluid flow lines and a convection steaming oven, the apparatus comprising: a wall-mountable connection unit supporting a plurality of base connector elements extending away from the wall and each for connection to a respective fluid flow service line in the wall; a plurality of satellite connector elements, each engageable in fluid-tight manner to a respective one of the base connector elements, and each connected, in use, to the convection steaming oven whereby said oven may be freely moved between an operational disposition adjacent the wall with the respective base and satellite connectors mutually engaged, and a de-coupled disposition away from the wall, with all the respective base and satellite connectors disengaged; and latching means for maintaining said oven in the operational disposition until release of the latching means allows transition to the de-coupled disposition, wherein a waste line connection comprises an exhaust means (2) to release any excessive steam, a waste chamber (5) within the base element (26), a waste outlet (6) connected to said waste chamber (5), and means (4) to connect the waste line connection to the waste chamber when the unit is engaged.

2. An apparatus according to Claim 1, characterised in that the exhaust means (2) is a chimney means connected to the pathway between the waste outlet (3) of the convection steaming oven and the connection (4) to the waste chamber (5).

3. An apparatus according to either Claim 1 or Claim 2, characterised in that the connection unit takes the form of a connection box.

4. An apparatus according to any one of Claims 1 to 3, characterised in that all the supply lines (such as gas and water) are provided with double shut-off base and satellite connector assemblies.

5. An apparatus according to any one of the preceding claims, characterised in that said oven is provided with a carrying means therefor, said carrying means being provided with a single operating lever (33, 34) to operate the latching means.

6. An apparatus according to Claim 5, characterised in that the single lever is connected to respective sleeves on the satellite connectors of the supply lines.

7. An apparatus according to either Claim 5 or Claim 6, characterised in that the single lever is actuatable by a manual mechanism (34) mounted on said carrying means for said oven.

8. An apparatus according to any one of Claims 5 to 7, characterised in that a connection between the lever and the manual mechanism passes through an expansion box (35), whereby the release handle (34) is allowed to return fully into a recessed housing therefor when the unit is engaged.

9. An apparatus according to any one of the preceding claims, characterised in that the connection between said oven and the connection unit includes an electrical earth connection.

10. An apparatus according to any one of Claims 5 to 9, characterised in that the carrying means for said oven is mounted on wheels, rollers or castors.

## Patentansprüche

1. Vorrichtung zum Koppeln von Fluidströmumgsleitungen und eines (mit einem) Konvektionsdampf(koch)herd(s), welche Vorrichtung umfaßt: eine wandmontierbare Verbindungs- oder Kupplungseinheit, die eine Anzahl von von der Wand hinweg abstehenden Basisverbinderelementen haltert, die jeweils für Verbindung mit einer betreffenden Fluidströmungsversorgungsleitung in der Wand vorgesehen sind; eine Anzahl von Satellitenverbinderelementen, die jeweils fluiddicht mit einem betreffenden der Basisverbinderelemente in Eingriff bringbar sind und die im Gebrauch jeweils mit dem Konvektionsdampfherd verbunden sind, so daß der Herd ungehindert zwischen einer Betriebs(auf)stellung an der Wand, in welcher die jeweiligen Basis- und Satellitenverbinder in gegenseitigem Eingriff stehen, und einer von der Wand entfernten Entkopplungs(auf)stellung, in welcher alle betreffenden Basis- und Satellitenverbinder getrennt sind, bewegt werden kann; und Verriegelungsmittel, um den Herd in der Betriebs(auf)stellung zu halten, bis durch Ausklinken der Verriegelungsmittel ein Übergang zur Entkopplungs(auf)stellung ermöglicht wird; wobei eine Abzugsleitungsverbindung eine Ablaß- oder Austrittseinheit (2) zum Ablassen etwaigen Überschußdampfes, eine im Basiselement (26) angeordnete Abzugskammer (5), einen mit der Abzugskammer (5) verbundenen Abzugsauslaß (6) und ein Mittel (4) zum Verbinden der Abzugsleitungsverbindung mit der Abzugskammer, wenn die Einheit in Eingriff gebracht oder angeschlossen ist, aufweist.

2. Vorrichtung nach Anspruch 1, dadurch gekennzeichnet, daß die Austrittseinheit (2) eine Kamineinheit ist, die mit der Strecke zwischen dem Abzugsauslaß (3) des Konvektionsdampfherds und der (dem) Verbindung(smittel) (4) zur Abzugskammer (5) verbunden ist.

3. Vorrichtung nach Anspruch 1 oder 2, dadurch gekennzeichnet, daß die Verbindungs- oder Kupplungseinheit die Form eines Kupplungskastens aufweist.

4. Vorrichtung nach einem der Ansprüche 1 bis 3, dadurch gekennzeichnet, daß alle Versorgungsleitungen (etwa für Gas und Wasser) mit Doppelabsperr-Basis- und -Satellitenverbinderanordnungen versehen sind.

5. Vorrichtung nach einem der vorangehenden Ansprüche, dadurch gekennzeichnet, daß der Herd mit einer Trageinheit dafür versehen ist, welche Trageinheit mit einem einzigen Betätigungshebel (33, 34) zum Betätigen der Verriegelungsmittel versehen ist.

6. Vorrichtung nach Anspruch 5, dadurch gekennzeichnet, daß der einzige Hebel mit jeweiligen Manschetten an den Satellitenverbindern der Versorgungsleitungen verbunden ist.

7. Vorrichtung nach Anspruch 5 oder 6, dadurch gekennzeichnet, daß der einzige Hebel mittels eines an der Trageinheit für den Herd montierten manuellen Mechanismus (34) betätigbar ist.

8. Vorrichtung nach einem der Ansprüche 5 bis 7, dadurch gekennzeichnet, daß eine Verbindung zwischen dem Hebel und dem manuellen Mechanismus durch einen Expansionskasten (35) verläuft, so daß der Ausklink(hand)griff (34) vollständig in ein ausgespartes Gehäuse dafür zurückkehren kann, wenn die Einheit in Eingriff gebracht bzw. angeschlossen ist.

9. Vorrichtung nach einem der vorangehenden Ansprüche, dadurch gekennzeichnet, daß die Verbindung bzw. Kupplung zwischen dem Herd und der Kupplungseinheit eine elektrische Erd(ungs)verbindung aufweist.

10. Vorrichtung nach einem der Ansprüche 5 bis 9, dadurch gekennzeichnet, daß die Trageinheit für den Herd auf Rädern, Rollen oder schwenkbaren Rollen gelagert ist.

## Revendications

1. Appareil pour relier des conduites d'écoulement de fluides et une étuve à vapeur à convection, l'appareil comprenant une unité de connexion à montage mural supportant une série de connecteurs de base s'écartant de la paroi, tous destinés à une connexion individuelle avec une conduite de service d'écoulement de fluide respective dans le mur; une série d'éléments de connexion satellites, tous susceptibles de s'engager individuellement, de manière étanche aux fluides, dans un connecteur de base respectif et connectés individuellement, en service, à l'étuve à vapeur à convection, de telle sorte que ladite étuve puisse être déplacée librement entre une position opérationnelle à proximité du mur où les connecteurs de base et les connecteurs satellites respectifs sont mutuellement engagés, et une position de désaccouplement à distance du mur où tous les connecteurs de base et les connecteurs satellites respectifs sont dégagés; et des moyens de verrouillage pour maintenir ladite étuve dans la position opérationnelle jusqu'à ce que la libération des moyens de verrouillage permette la transition vers la position de désaccouplement, appareil dans lequel une connexion de conduite de déchets comprend des moyens d'échappement (2) pour libérer la vapeur d'eau excédentaire éventuelle, une chambre de déchets (5) à l'intérieur de l'élément de base (26), une sortie de déchets (6) connectée à ladite chambre de déchets (5) et des moyens (4) pour connecter la connexion de la conduite de déchets à la chambre de déchets lorsque l'unité est engagée.

2. Appareil selon la revendication 1, caractérisé en ce que les moyens d'échappement (2) sont des moyens à cheminée connectés au passage entre la sortie de déchets (3) de l'étuve à vapeur à convection et la connexion (4) avec la chambre de déchets (5).

3. Appareil selon l'une quelconque des revendications 1 et 2, caractérisé en ce que l'unité de connexion se présente sous la forme d'une boîte de connexion.

4. Appareil selon l'une quelconque des revendications 1 à 3, caractérisé en ce que toutes les conduites d'alimentation (telles que des conduites de gaz et d'eau) sont pourvues d'ensembles satellites et de base à double fermeture.

5. Appareil selon l'une quelconque des revendications précédentes, caractérisé en ce que ladite étuve est pourvue de moyens de transport prévus à cet effet, lesdits moyens de transport étant pourvus d'un levier d'actionnement unique (33, 34) pour faire fonctionner les moyens de verrouillage.

6. Appareil selon la revendication 5, caractérisé en ce que le levier unique est connecté à des douilles respectives sur les connecteurs satellites des conduites d'alimentation.

7. Appareil selon la revendication 5 ou 6, caractérisé en ce que le levier unique peut être actionné par un mécanisme manuel (34) monté sur lesdits moyens de transport de ladite étuve.

8. Appareil selon l'une quelconque des revendications 5 à 7, caractérisé en ce qu'une connexion entre le levier et le mécanisme manuel passe par une boîte d'expansion (35), de sorte que la manette de libération (34) puisse retourner complètement dans un logement en creux prévu à cet effet lorsque l'unité est engagée.

9. Appareil selon l'une quelconque des revendications précédentes, caractérisé en ce que la connexion entre ladite étuve et l'unité de connexion comprend une connexion électrique de terre.

10. Appareil selon l'une quelconque des revendications 5 à 9, caractérisé en ce que les moyens de transport pour ladite étuve sont montés sur des roues, des rouleaux ou des roulettes.
